# EUROPEAN PATENT SPECIFICATION

(11) **EP 3 785 918 B1**
(45) Date of publication and mention of the grant of the patent: **02.08.2023**
(21) Application number: 20190843.1
(22) Date of filing: 13.08.2020
(51) Int. Cl.: B41J 2/175

(54) **VALVE DEVICE, IMAGE FORMING APPARATUS, AND METHOD FOR DETERMINING THE DETERIORATION DEGREE OF A VALVE**
VENTILVORRICHTUNG, BILDERZEUGUNGSVORRICHTUNG UND VERFAHREN ZUR BESTIMMUNG DES VERSCHLECHTERUNGSGRADES EINES VENTILS
DISPOSITIF DE SOUPAPE, APPAREIL DE FORMATION D'IMAGES ET PROCÉDÉ DE DÉTERMINATION DU DEGRÉ DE DÉTÉRIORATION DE LA SOUPAPE

(30) Priority: 26.08.2019 JP 2019153982
(43) Date of publication of application: 03.03.2021
(73) Proprietor: KONICA MINOLTA, INC., Tokyo 100-7015 (JP)
(72) Inventor: HIROI, Toshiaki, Tokyo, 100-7015 (JP); TOKIMATSU, Hiroyuki, Tokyo, 100-7015 (JP)
(74) Representative: Henkel & Partner mbB

(56) References cited:
- EP-A1- 3 446 878
- EP-A2- 2 422 986
- EP-B1- 1 938 994
- EP-B1- 2 422 986
- EP-B1- 3 112 172
- EP-B1- 3 446 878
- JP-A- 2003 219 664
- JP-A- 2014 031 861
- JP-A- 2014 031 861

## Description

### BACKGROUND OF THE INVENTION

### 1. Field of the Invention

The present invention relates to an image forming apparatus comprising a valve device, and a method for determining a deterioration degree of a valve in a valve device of an image forming apparatus.

### 2. Description of the Related Art

Conventionally, there is known a valve device (e.g., an image forming apparatus or the like) including a flow channel section where fluid flows, a valve that switches between opening and blocking of a fluid flow in the flow channel section, and a reserving section that reserves the fluid from the flow channel section. In such a valve device, the valve cannot perform a desired operation when the valve has a defect. Therefore, a device for determining an operating state of a valve is known.

For example, JP 2011-203204 A discloses an apparatus that can determine an operating state of a valve by detecting a driving current or a driving voltage supplied by a separately-provided inspection driving means.

JP 2014-031861 A discloses a failure detection device for a solenoid valve which includes an AC power supply, an electrode connected via a cable, an electrode grounded via a cable, and a conversion circuit converting an impedance between the electrode and the electrode into a DC voltage. This device is constituted of a discrimination circuit for discriminating a case where a liquid is not detected and a case where a liquid is detected based on the concept that, when there is no liquid between the electrodes, the impedance between the electrodes is open, and when there is a liquid between the electrodes, the impedance is short-circuited, a control circuit which receives a signal from a discrimination circuit, and a solenoid valve drive circuit which opens and closes a solenoid valve. By converting this impedance into a voltage and comparing it with a reference voltage, it is possible to determine the driving state of the electromagnetic valve and to detect the failure of the electromagnetic valve including a mechanical failure.

EP 3 446 878 A1 discloses an inkjet printing device and a maintenance method with which pressurized maintenance is selectively performed on some ejection heads while a meniscus surface of ink is appropriately maintained. In that context EP 3 446 878 A1 discloses that an intermediate tank of the ink flow path arrangement of the inkjet printing device is provided with an upper limit sensor and a reference sensor. The reference sensor indirectly detects the intermediate reference ink amount by detecting the back pressure. The operation of a liquid sending pump is suitably controlled according to whether the ink is detected in the intermediate reference ink amount by the reference sensor. The upper limit sensor detects the upper limit ink amount determined so as not to be dangerous to maintain the intermediate tank. Normally, when the ink amount in the intermediate tank rises more than normal and the pressure of the ink rises, a check valve is released and the ink is returned to a sub-tank. When the check valve does not function normally, the process regarding the operation of supplying ink can be paused entirely or other suitable processes can be performed depending on the detection by the upper limit sensor.

EP 2 422 986 A2 discloses a liquid cartridge for an inkjet printer that is provided with an optical sensor to detect distinct positions of a movable member moving inside and along a liquid path, and with a memory storing output signals of the sensor as characteristic information of the sensor.

JP 2003 219664 A discloses a deterioration detector in which a degree of elongation/contraction of a piezoelectric actuator under driving can be detected by measuring a signal voltage and detecting a variation in the capacitance by a variation of the high frequency terminal voltage.

### SUMMARY OF THE INVENTION

However, in the configuration described in JP 2011-203204 A, it is necessary to separately provide inspection driving means. As a result, there arises a problem including an increase in cost and a need for space for placing the inspection driving means, and therefore, there is a risk that a deterioration degree of a valve (such as a failure or a lifetime) due to durability and aging deterioration cannot be easily determined.

An object of the present invention is to provide an image forming apparatus comprising a valve device, and a method for determining a deterioration degree of a valve in a valve device of an image forming apparatus, each capable of easily determining a deterioration degree of a valve due to durability and aging deterioration.

To achieve the above-mentioned object, according to the present invention, an image forming apparatus with the features of claim 1 and a method with the features of claim 13 are provided.

### BRIEF DESCRIPTION OF DRAWING

The advantages and features provided by one or more embodiments of the invention will become more fully understood from the detailed description given hereinbelow and the appended drawings which are given by way of illustration only, and thus are not intended as a definition of the limits of the present invention:
FIG. 1 illustrates a schematic configuration of an image forming apparatus according to an embodiment of the present invention;
FIG. 2 is a block diagram illustrating a main functional configuration of the image forming apparatus;
FIG. 3 illustrates an example of an ink flow channel system;
FIG. 4 indicates a transition of pressure in a second sub-tank;
FIG. 5 illustrates confirmation results of whether or not a second valve operates normally according to a use condition of the second valve and operation signals;
FIG. 6 indicates a relationship between a deterioration degree and a remaining life of the second valve;
FIG. 7 is a flowchart illustrating an example of a control operation for determining the deterioration degree of the second valve in the image forming apparatus; and
FIG. 8 is a flowchart illustrating another example of the control operation for determining the deterioration degree of the second valve in the image forming apparatus.

### DESCRIPTION OF THE PREFERRED EMBODIMENTS

Hereinafter, one or more embodiments of the present invention will be described with reference to the drawings. However, the scope of the invention is not limited to the disclosed embodiments.

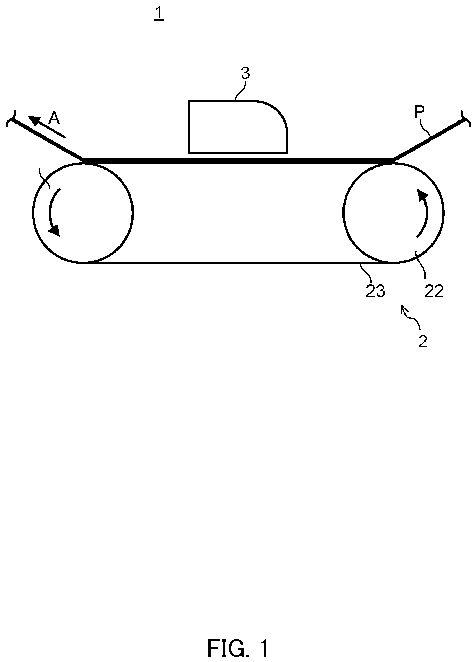

An embodiment of the present invention is described in detail below based on the drawings. FIG. 1 illustrates a schematic configuration of image forming apparatus 1 according to an embodiment of the present invention.

As shown in FIG. 1, image forming apparatus 1 is an inkjet image forming apparatus including belt conveying device 2, recording head 3, and the like.

Belt conveying device 2 includes endless conveying belt 23 of a predetermined width suspended under tension around driving roller 21 and driven roller 22 that are disposed in parallel at a predetermined interval. The upper surface of conveying belt 23 suspended around driving roller 21 and driven roller 22 is a mounting surface for placing recording medium P in close contact therewith. Belt conveying device 2 corresponds to "conveying section" of the present invention.

Note that the surface of conveying belt 23 is coated with an adhesive so called "*Jibαri*" in order to place recording medium P being conveyed in close contact with the upper surface of conveying belt 23. Driving roller 21 is driven by a sub scanning motor (not shown).

In belt conveying device 2, driving roller 21 rotates at a predetermined speed in a counterclockwise direction (see an arrow) in FIG. 1 by a rotational drive of the sub scanning motor, thereby causing conveying belt 23 suspended around driving roller 21 and driven roller 22 to rotationally move. By such an operation, recording medium P mounted on the upper surface of conveying belt 23 is conveyed in a direction of arrow A, which is a sub scanning direction, in the figure.

For recording medium P, recording medium commonly used in inkjet recording, such as paper, fabric, plastic films, glass plates, and the like, can be used. Recording medium P may be a sheet-like medium cut to a predetermined size, or may be a long medium continuously fed out from an original winding wound in a roll shape.

Note that a belt cleaning device (not shown) is provided on the other side of a conveying surface of recording medium P in belt conveying device 2. The belt cleaning device removes a foreign substance adhering to conveying belt 23.

Recording head 3 includes a plurality of inkjet heads, and is disposed at a predetermined interval from above the surface of conveying belt 23 where recording medium P is placed. Recording head 3 ejects ink droplets from a number of nozzles provided on its lower surface, thereby recording a desired image on recording medium P conveyed by a rotational movement of conveying belt 23.

A shuttle-type recording head is used as recording head 3 in the present embodiment. The shuttle-type recording head refers to one that is mounted at a carriage (not shown) and reciprocates in a main scanning direction orthogonal to a conveying direction of recording medium P that is intermittently conveyed. In this case, at a time of recording, driving of driving roller 21 is controlled so that conveying belt 23 performs an intermittent operation of repeating a standby state and a driving state.

Note that recording head 3 may be a line-type recording head that is suspended fixedly in a width direction of conveying belt 23 and records images by ejecting ink droplets onto recording medium P that is continuously conveyed. In this case, at a time of recording, driving of driving roller 21 is controlled so that conveying belt 23 continuously moves (rotationally operates).

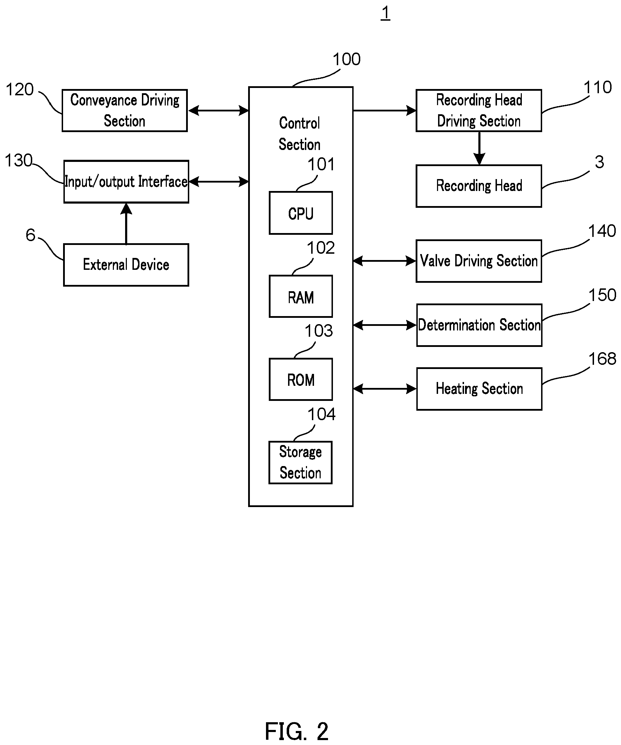

FIG. 2 is a block diagram showing a main functional configuration of image forming apparatus 1. Image forming apparatus 1 includes control section 100, recording head driving section 110, conveyance driving section 120, input/output interface 130, valve driving section 140, determination section 150, and heating section 168.

Control section 100 includes a central processing unit (CPU) 101, a random access memory (RAM) 102, a read only memory (ROM) 103, and storage section 104.

CPU 101 reads a program and setting data for various controls stored in ROM 103, stores them in RAM 102, executes the program, and performs various arithmetic processing. CPU 101 also integrally controls an entire operation of image forming apparatus 1.

RAM 102 provides CPU 101 with a working memory space and stores temporary data. Note that RAM 102 may include a nonvolatile memory.

ROM 103 stores a program and setting data for various controls executed by CPU 101. Note that instead of ROM 103, a rewritable nonvolatile memory such as an electrically erasable programmable read only memory (EEPROM) or a flash memory may be used.

Storage section 104 stores a print job (an image recording instruction) input from an external device 6 through input/output interface 130 and image data related to the print job. As storage section 104, a hard disk drive (HDD) is used, for example, and a dynamic random access memory (DRAM) or the like may be used together.

Recording head driving section 110 supplies a driving signal corresponding to image data at an appropriate timing to recording head 3 based on a control of control section 100, and thereby an amount of ink corresponding to a pixel value of the image data is ejected from a nozzle of recording head 3.

Conveyance driving section 120 supplies a driving signal to a sub scanning motor of driving roller 21 based on the control of control section 100, thereby rotationally moving conveying belt 23 at a predetermined speed and timing.

Input/output interface 130 mediates transmission and reception of data between external device 6 and control section 100. Input/output interface 130 includes, for example, either one of various serial interfaces or various parallel interfaces, or a combination thereof.

External device 6 is, for example, a personal computer, and supplies an image recording instruction (a print job) and image data to control section 100 through input/output interface 130.

Valve driving section 140 controls a valve provided in a flow channel section including a flow channel of ink (fluid) from an ink tank to an ink ejecting section in recording head 3. The valve is an electromagnetic valve that switches between opening and blocking of the flow channel in the flow channel section by a predetermined electrical signal (operation signal) being applied. The valve and the flow channel section are provided in ink flow channel system 160 to be described later. The predetermined electrical signal is a voltage or current based signal.

Determination section 150 determines a deterioration degree of the valve. Determination of the deterioration degree of the valve in determination section 150 will be described later.

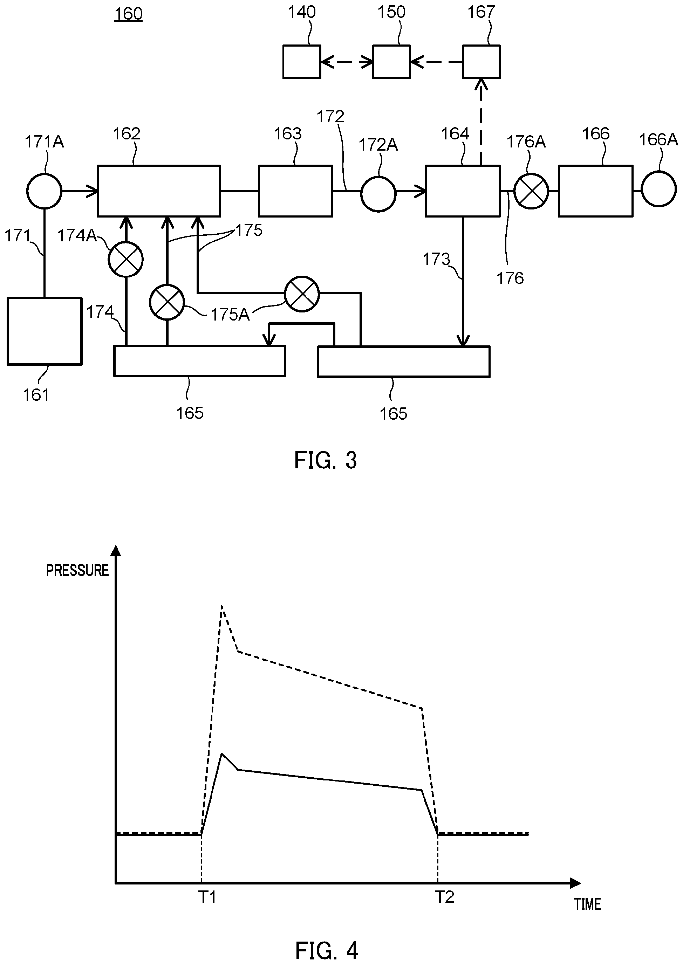

Ink circulates between ink tank 161 and ink ejecting section 165 by ink flow channel system 160 as shown in FIG. 3, for example. Ink flow channel system 160 includes ink tank 161, first sub-tank 162, deaerating module 163, second sub-tank 164, ink ejecting section 165, air tank 166, and detecting section 167.

Ink tank 161 accommodates ink to be supplied to ink ejecting section 165. Ink tank 161 supplies ink to first sub-tank 162 through first flow channel section 171. First flow channel section 171 is provided with first sucking section 171A. First sucking section 171A is a pump for sucking ink in ink tank 161. Ink is sucked from ink tank 161 by first sucking section 171A, thereby being supplied to first sub-tank 162.

Ink in ink tank 161 is a gel ink containing a gelling agent, and is fed to first sub-tank 162 by first sucking section 171A after being sheared by a rotor provided in the tank. Ink supplied to first sub-tank 162 circulates in an order of first sub-tank 162, deaerating module 163, second sub-tank 164, ink ejecting section 165, and first sub-tank 162. Heating section 168 is provided in each flow channel section through which the ink circulates. Heating section 168 is controlled to a predetermined temperature by control section 100. With this configuration, a gel ink is transferred in a sol form, an ink viscosity in a flow channel section is kept constant, and thus ink circulates through each flow channel section.

First sub-tank 162 supplies ink supplied from ink tank 161 to second sub-tank 164 through second flow channel section 172. Second flow channel section 172 is provided with deaerating module 163 and second sucking section 172A.

Deaerating module 163 removes air from ink in second flow channel section 172. Deaerating module 163 is connected to a flow channel section in which a vacuum pump (not shown) is provided. The vacuum pump is used to remove air from ink passing through deaerating module 163.

Second sucking section 172A is a pump for sucking ink in first sub-tank 162, and is provided between deaerating module 163 and second sub-tank 164. Ink is sucked from first sub-tank 162 by second sucking section 172A so that ink is supplied to second sub-tank 164.

Second sub-tank 164 supplies ink supplied from first sub-tank 162 to ink ejecting section 165 through third flow channel section 173. In ink ejecting section 165, ink is supplied from second sub-tank 164 while ink is ejected to recording medium during image formation. Second sub-tank 164 corresponds to "reserving section" of the present invention.

Further, there is a plurality of ink ejecting sections 165 provided, and ink supplied from second sub-tank 164 to a predetermined ink ejecting section 165 is supplied to an adjacent ink ejecting section 165 through the ink ejecting section 165. In FIG. 3, only two ink ejecting sections 165 are illustrated.

In addition, fourth flow channel section 174 is provided between ink ejecting section 165 located on the most downstream side in ink supply from second sub-tank 164 and first sub-tank 162. Fourth flow channel section 174 is provided with first valve 174A.

First valve 174A is an electromagnetic valve that opens and blocks a flow channel of ink in fourth flow channel section 174 by an operation signal such as voltage or current being applied.

Fourth flow channel section 174 is a flow channel for discharging ink remaining in ink ejecting section 165 to first sub-tank 162 at the time of completing image formation or the like. Valve driving section 140 opens a flow channel in fourth flow channel section 174 by first valve 174A at the time of completing image formation. As a result, ink in ink ejecting section 165 is discharged into first sub-tank 162.

In addition, fifth flow channel section 175 is provided between each of ink ejecting sections 165 and first sub-tank 162. Each of fifth flow channel sections 175 is provided with second valve 175A. Fifth flow channel section 175 corresponds to "flow channel section" of the present invention.

Second valve 175A is an electromagnetic valve that opens and blocks a flow channel of ink in fifth flow channel section 175 by an operation signal such as voltage or current being applied. Second valve 175A corresponds to "valve" of the present invention.

In image forming apparatus 1, when an air bubble is generated in ink in ink ejecting section 165, maintenance for removing the air bubble is performed. In fifth flow channel section 175, a bubble of ink is removed by returning ink in each of ink ejecting sections 165 to first sub-tank 162 during the maintenance.

In this case, valve driving section 140 opens a flow channel in fifth flow channel section 175 by second valve 175A. As a result, fifth flow channel section 175 and second sub-tank 164 communicate with ink ejecting section 165.

Then, valve driving section 140 causes second sucking section 172A to suck ink. Circulating ink in this manner makes it possible to remove a bubble of ink in ink ejecting section 165. At this point, a valve associated with second sub-tank 164 such as first valve 174A and third valve 176A which is described later is in a state of blocking a corresponding flow channel.

Air tank 166 is a tank for sucking air in second sub-tank 164. Sixth flow channel section 176 is provided between second sub-tank 164 and air tank 166. Sixth flow channel section 176 is provided with third valve 176A. In addition, air tank 166 is provided with third sucking section 166A.

Third valve 176A is an electromagnetic valve that opens and blocks a flow channel of ink in sixth flow channel section 176 by an operation signal such as voltage or current being applied. Third sucking section 166A is a pump for sucking air in second sub-tank 164 through sixth flow channel section 176.

Third valve 176A opens a flow channel of sixth flow channel section 176 and sucks air in second sub-tank 164, thereby maintaining a liquid surface condition of ink in second sub-tank 164.

Detecting section 167 is a pressure sensor for detecting pressure in second sub-tank 164. Detecting section 167 monitors pressure of second sub-tank 164, thereby managing an amount of suction in second sucking section 172A and an amount of ink in second sub-tank 164.

Determination section 150 determines a deterioration degree of second valve 175A on a basis of an operation of second valve 175A based on an operation signal, and of pressure in second sucking section 172A.

Specifically, determination section 150 varies a signal value of an operation signal in a plurality of stages, and acquires pressures in second sub-tank 164 respectively corresponding to signal values from detecting section 167. Then, determination section 150 determines whether or not second valve 175A operates normally based on each pressure, and determines the deterioration degree of second valve 175A based on a determination result.

When second valve 175Afails, ink in ink ejecting section 165 does not flow through fifth flow channel section 175 when ink is to be sucked by second sucking section 172A. Thus, a load applied to ink ejecting section 165 increases and pressure in second sub-tank 164 rises since only an ejection surface of ink ejecting section 165 serves as an escape path of ink.

When a flow channel of fifth flow channel section 175 is opened by second valve 175A and ink is sucked by second sucking section 172A, it is confirmed that pressure in second sub-tank 164 rises within a range of time T1 to T2 as shown in FIG. 4.

Comparing when second valve 175A is operating normally (the solid line) to when second valve 175A is failing (the broken line), a pressure rising amount is greater when second valve 175A is failing than when it is operating normally.

Therefore, determination section 150 acquires pressures in second sub-tank 164 respectively corresponding to signal values of operation signals that are varied stepwise, from detecting section 167, and determines whether each pressure is within a normal range. The normal range is a range in which second valve 175A operates normally (e.g., a range less than a predetermined threshold) and can be appropriately set by an experiment or the like.

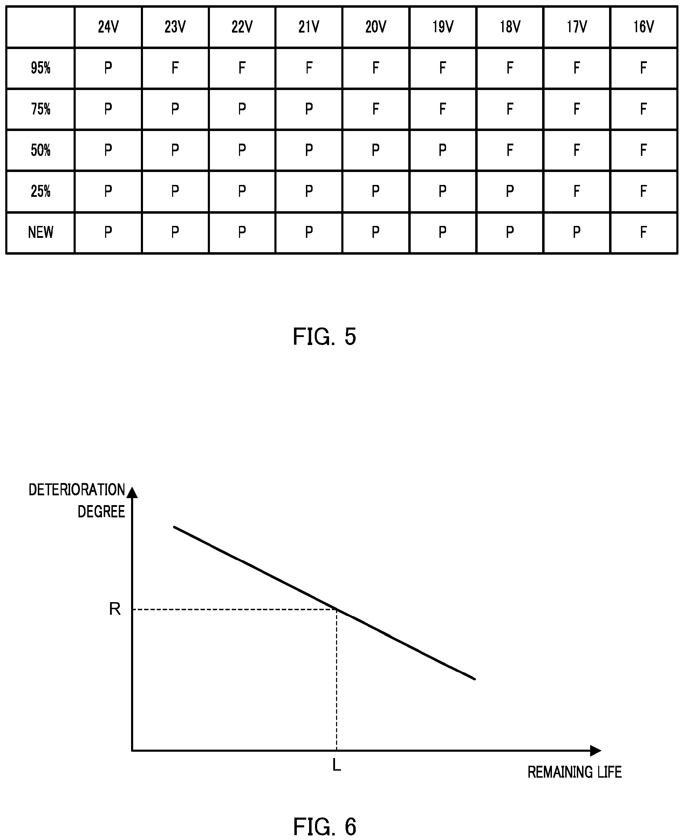

FIG. 5 shows the confirmation results of whether or not second valve 175A operates normally according to a use condition of second valve 175A and operation signals. 24V in FIG. 5 corresponds to a rated value of a signal value of an operating signal. In addition, "P" in FIG. 5 indicates that second valve 175A is normally operated, and "F" in FIG. 5 indicates that second valve 175A is not normally operated.

Further, "95%" or the like in FIG. 5 shows a ratio of an actual number of drive times to the number of drive times set as a specification. That is, for example, "95%" indicates that the number of drive times of second valve 175A has reached 95% of a specification. In addition, "new" in FIG. 5 indicates that second valve 175A is new.

As shown in FIG. 5, when second valve 175A is new, it is confirmed that second valve 175A operates normally even at a value significantly lower than the rated value (17V in FIG. 5). On the contrary, it is confirmed that as the number of drive times of second valve 175A increases, a minimum value of a signal value at which second valve 175A normally operates approaches the rated value.

From the above, it is possible to confirm that the minimum value of an operation signal at which second valve 175A operates normally fluctuates, and accordingly a deterioration degree of second valve 175A changes.

Therefore, determination section 150 determines the deterioration degree of second valve 175A based on the minimum value of the operation signal at which second valve 175A normally operates.

Determination section 150 defines, as the deterioration degree, a ratio of a first difference and a second difference, i.e., a ratio of the second difference which is a difference between the rated value of second valve 175A and the minimum value of the operation signal of second valve 175A to the first difference which a difference between the rated value and the minimum value of the operation signal of second valve 175A when second valve 175A is new.

Determination section 150 outputs a display command of a calculated deterioration degree, that is, a determination result of a deterioration degree. A display command is output to, for example, a display section of external device 6, and the display section displays a determination result of the deterioration degree. In this manner, a user can easily recognize the deterioration degree of second valve 175A.

Note that the displayed determination result of the deterioration degree may be a numerical value of the deterioration degree itself. In addition, when the deterioration degree rises to a degree that requires replacement of second valve 175A (when second valve 175A fails), a display may show a replacement promotion of second valve 175A as the determination result of the deterioration degree.

Further, determination section 150 may calculate a remaining life of second valve 175Abased on a relationship between a use condition of second valve 175A and a minimum value of an operation signal at which second valve 175A normally operates. For example, since a minimum value of an operation signal is 18V when the number of drive times is "25%" in FIG. 5, a remaining life is 75% by subtracting 25% from 100%.

In this manner, a user can easily recognize the remaining life of second valve 175A.

Determination section 150 may also calculate the remaining life of second valve 175A based on a relationship between the remaining life of second valve 175A and the deterioration degree. For example, there is the relationship between the remaining life of second valve 175A and the deterioration degree as shown in FIG. 6. The remaining life of second valve 175A is, for example, the number of drive times of second valve 175A. An example shown in FIG. 6 is a relationship in which the remaining life decreases linearly as the deterioration degree increases.

For example, when the deterioration degree of second valve 175A is R, determination section 150 sets a calculated value of the remaining life to L because the remaining life (e.g., the number of drive times of second valve 175A) is L.

In this manner, a user can also easily recognize the remaining life of second valve 175A. Note that, as described above, a resultant of calculation based on the relationship between the use condition of second valve 175A and the minimum value of the operation signal at which second valve 175A normally operates is used as the deterioration degree of second valve 175A.

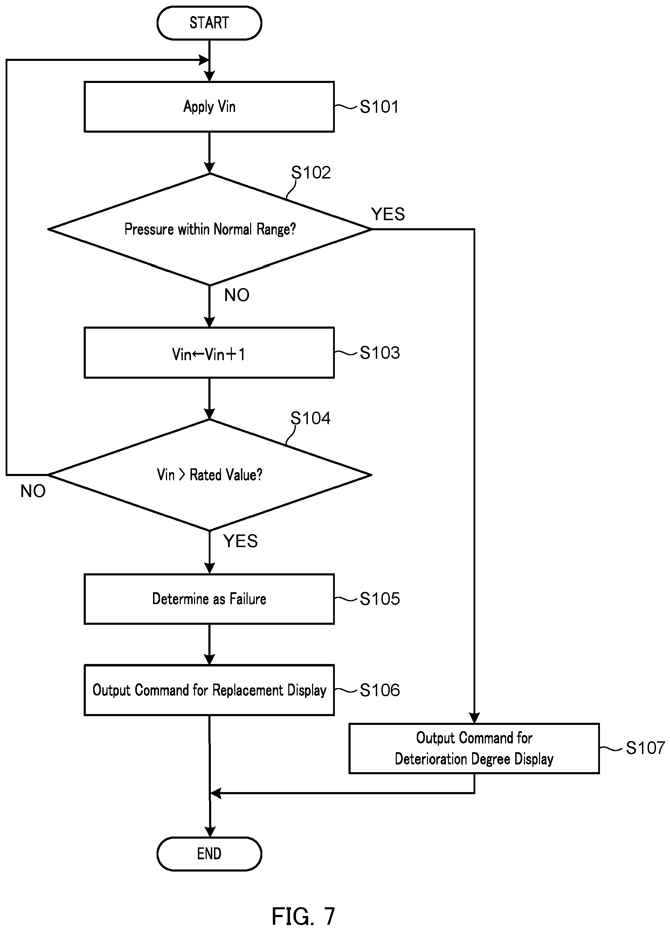

Next, examples of control operation for determining the deterioration degree of second valve 175A in image forming apparatus 1 will be described. FIG. 7 is a flow chart showing an example of control operation for determining the deterioration degree of second valve 175A in image forming apparatus 1. This control is executed, for example, either before or after a maintenance of ink ejecting section 165 is performed. Incidentally, process in valve driving section 140 and determination section 150 is executed via control section 100.

As shown in FIG. 7, control section 100 applies Vin to second valve 175A (step S101). Vin is an electric signal (a voltage value) applied to second valve 175A, and corresponds to "predetermined signal value" of the present invention. An initial value of Vin is the minimum value of the operation signal at which second valve 175A normally operates when second valve 175Ait is new.

Control section 100 determines whether or not pressure in second sub-tank 164 (predetermined pressure) is within a normal range (step S102). As a result of the determination, when the pressure is not within the normal range (at step S102, NO), control section 100 increases a set value of Vin by 1V (step S103). That is, control section 100 increases the predetermined signal value stepwise to the rated value of the operation signal.

Then, control section 100 determines whether or not Vin is greater than the rated value (step S104). As a result of the determination, if Vin is equal to or smaller than the rated value (at step S104, NO), a process returns to step S101.

On the other hand, when Vin is greater than the rated value (at step S104, YES), control section 100 determines that second valve 175A is failed (step S105). Then, control section 100 outputs a replacement indication command for second valve 175A (step S106).

Returning to the determination at step S102, when pressure is within a normal range (at step S102, Yes), control section 100 outputs a command for displaying the deterioration degree according to the value of Vin (step S107). At step S107, a command for displaying the remaining life of second valve 175A may also be used besides the deterioration degree. The control ends after step S106 or step S107.

According to the present embodiment configured as described above, since the deterioration degree of second valve 175A is determined based on pressure in second sub-tank 164, it is possible to easily determine the deterioration degree of second valve 175A due to durability and aging deterioration.

In addition, it is possible to easily identify a change in the deterioration degree of second valve 175A since it is determined whether or not second valve 175A operates normally based on each pressure in second sub-tank 164 corresponding to each of signal values that are varied in a plurality of stages. As a result, a failure of second valve 175A can easily be determined in advance. Further, it is possible to easily identify a cause of a failure when second valve 175A fails, and moreover, it is possible to reduce downtime when a failure occurs.

Incidentally, a workable voltage range is narrowed over time because frictional resistance of a sliding part in second valve 175A is increased by use. Especially in the present embodiment, since gel ink requiring heating is used as ink, second valve 175A is likely to be worn due to deterioration of its own sliding part or adhesion of ink to the sliding part due to heating of ink.

Thus, the present embodiment makes it possible to easily identify a change in the deterioration degree of second valve 175A, and even in a configuration in which deterioration due to durability and aging deterioration of second valve 175A is apt to progress, the deterioration can be quickly identified.

Further, in the present embodiment, it is unnecessary to separately provide inspection driving means for inspecting driving current or driving voltage of second valve 175A since the deterioration degree of second valve 175A is determined based on pressure of second sub-tank 164. As a result, it is possible to save space for disposing inspection driving means and reduce size and cost of an apparatus.

Note that, in the embodiment described above, a configuration calculating the deterioration degree corresponding to Vin is employed, but the present invention is not limited thereto. For example, control section 100 may determine the deterioration degree of second valve 175A by determining whether second valve 175A works normally or fails.

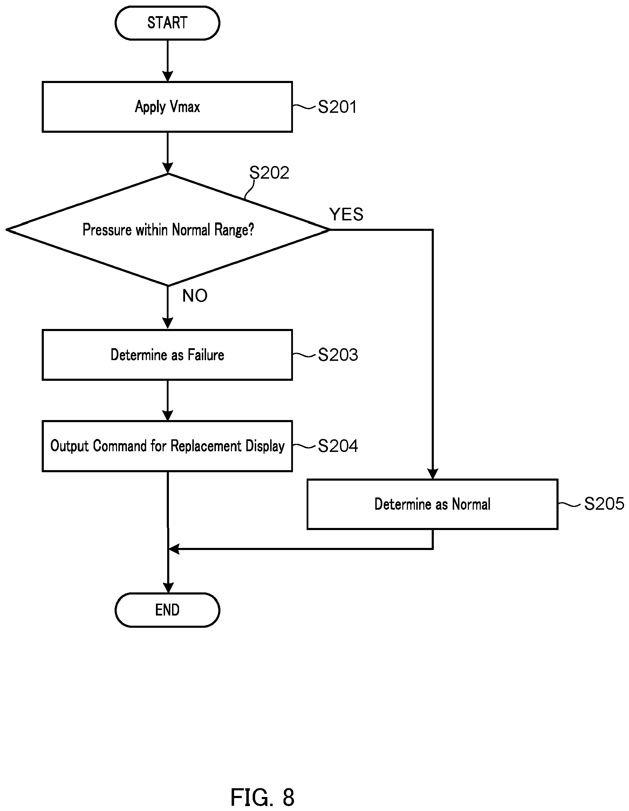

An example of determination control operation in such a configuration will be described. FIG. 8 is a flow chart showing an example of control operation for determining the deterioration degree of second valve 175A in image forming apparatus 1.

As shown in FIG. 8, control section 100 applies Vmax (a predetermined signal value), which is an electric signal closest to the rated value of the operation signal, to second valve 175A (step S201). Then, control section 100 acquires pressure of second sub-tank 164 from detecting section 167, and determines whether the pressure is within the normal range (step S202).

As a result of the determination, when the pressure is not within the normal range (at step S202, NO), control section 100 determines that second valve 175A is failed (step S203). Then, control section 100 outputs a replacement indication command for second valve 175A (step S204).

On the other hand, when the pressure is within the normal range (at step S202, YES), control section 100 determines that second valve 175A is normal (step S205). The control ends after step S204 or step S205.

The deterioration degree of second valve 175A can also be determined in such a configuration.

Although second valve 175A is used as an example of a valve in the embodiment described above, the present invention is not limited thereto and may be applied to another valve such as third valve 176A.

In addition, as in the configuration shown in FIG. 3 including second valve 175A and third valve 176A, the deterioration degree of each valve may be determined in a configuration including a plurality of flow channel sections and a plurality of valves corresponding to each flow channel section. In this case, determination section 150 may have a criterion for determining the deterioration degree of each valve.

When normal operation ranges of respective valves are different from each other, determination section 150 determines the deterioration degree of the respective valves by using different criteria.

In this manner, it is possible to determine the deterioration degrees of a plurality of valves respectively. Incidentally, it is sufficient that at least one of the above criteria is set.

In addition, although ink is exemplified as a fluid in the embodiment described above, the present invention is not limited thereto, and may be a gas such as air or gas, or a fluid other than ink.

Further, although a valve device is applied to image forming apparatus 1 in the embodiment described above, the present invention is not limited thereto, and the valve device may be applied to a device other than an image forming apparatus.

In addition, in the embodiment described above, although determination by determination section 150 is performed either before or after maintenance in image forming apparatus 1 is performed, the present invention is not limited thereto and may be performed at any timing. For example, the determination may be performed every predetermined time or based on an instruction from a user.

Further, although a gel ink is used as ink in the embodiment described above, it may be ink other than a gel ink. Note that a heating section may not be provided in a case where ink does not require heating.

In addition, although the number of drive times of second valve 175A is exemplified as a use condition of second valve 175A in the embodiment described above, the present invention is not limited thereto, and other parameters may be used. For example, in a case of a configuration in which a gel ink is used as ink, a heating time of ink may be used as a use condition of second valve 175A.

Further, in the embodiment described above, although an increase or decrease of voltage value (current value) is used as a variation of an operation signal of second valve 175A, the present invention is not limited thereto. For example, an increase or decrease of the number of pulse signals based on voltage value or an increase or decrease of a pulse width of the pulse signal may be used as an increase or decrease of an operation signal of second valve 175A.

In addition, in the embodiment described above, although the deterioration degree of second valve 175A is defined as the second difference with respect to the first difference, the present invention is not limited thereto, and may be a value based on other parameters.

Further, in the embodiment described above, although valve driving section 140 and determination section 150 perform the respective processes via control section 100, the present invention is not limited thereto, and the respective processes may be performed without control section 100.

Further, in the embodiment described above, although the deterioration degree of second valve 175A is displayed when pressure of second sub-tank 164 falls outside the normal range, the present invention is not limited thereto. For example, the deterioration degree based on the minimum value of the signal value to operate normally may be displayed after obtaining all pressure of second sub-tank 164 in each signal value varied to a plurality of stages

The scope of the invention is defined by the claims.

### Reference Signs List

1 Image forming apparatus
2 Belt conveying device
3 Recording head
21 Driving roller
22 Driven roller
23 Conveying belt
100 Control section
110 Recording head driving section
120 Conveyance driving section
130 Input/output interface
140 Valve driving section
150 Determination section
160 Ink flow channel system
161 Ink tank
162 First sub-tank
163 Deaerating module
164 Second sub-tank
165 Ink ejecting section
166 Air tank
166A Third sucking section
167 Detecting section
168 Heating section
171 First flow channel section
171A First sucking section
172 Second flow channel section
172A Second sucking section
173 Third flow channel section
174 Fourth flow channel section
174A First valve
175 Fifth flow channel section
175A Second valve
176 Sixth flow channel section
176A Third valve

## Claims

1. An image forming apparatus (1) including a valve device, the valve device comprising:
a flow channel section (175) where ink flows in operation;
a reserving section (164) that reserves the ink from the flow channel section (175) in operation;
a valve (175A) that is configured to switch between opening and blocking of the ink flow in the flow channel section (175) by application of a predetermined electrical operation signal;
a detecting section (167) for detecting pressure in the reserving section (164); and
a determination section (150) that is configured to determine whether or not the valve (175A) operates normally by acquiring the pressure in the reserving section (164) from the detecting section (167) corresponding to a signal value of the electrical operation signal applied to the valve (175A) and determining whether the pressure is within a predetermined normal range, and to determine the deterioration degree of the valve (175A) based on the determination result.

2. The image forming apparatus (1) according to claim 1, wherein the determination section (150) is configured to vary the signal value of the predetermined electrical operation signal applied to the valve (175A) in a plurality of stages, to determine whether or not the valve (175A) operates normally based on the acquired pressures in the reserving section (164) respectively corresponding to the signal values, and to determine the deterioration degree of the valve (175A) based on the determination result.

3. The image forming apparatus (1) according to claim 2, wherein the determination section (150) is configured to increase the signal value of the predetermined electrical operation signal applied to the valve (175A) stepwise to a rated value of the electrical operation signal.

4. The image forming apparatus (1) according to claim 3, wherein the determination section (150) is configured to determine the deterioration degree of the valve (175A) based on a minimum signal value of the predetermined electrical operation signal at which the valve (175A) operates normally.

5. The image forming apparatus (1) according to claim 4, wherein the determination section (150) is configured to calculate a remaining life of the valve (175A) based on a predetermined relationship between a use condition of the valve (175A) and the minimum value, the use condition indicating a ratio of an actual number of drive times of the valve (175A) to the number of drive times set as a specification.

6. The image forming apparatus (1) according to claim 4 or 5, wherein the determination section (150) is configured to define, as the deterioration degree, a ratio of a second difference to a first difference, the second difference being a difference between the rated value of the predetermined electrical operation signal of the valve (175A) and the minimum value of the of the predetermined electrical operation signal of the valve (175A), the first difference being a difference between the rated value of the predetermined electrical operation signal and the minimum value of the predetermined electrical operation signal of the valve (175A) when the valve (175A) is new.

7. The image forming apparatus (1) according to any one of claims 1 to 6, wherein the determination section (150) is configured to determine whether the predetermined pressure is within a normal pressure range in which the valve (175A) operates normally by comparing whether a pressure rising amount is greater when the valve (175A) is failing than when it is operating normally.

8. The image forming apparatus (1) according to any one of claims 1 to 7, wherein the determination section (150) is configured to output a display command of the determination result of the deterioration degree.

9. The image forming apparatus (1) according to any one of claims 1 to 8, wherein:
the valve device (1) comprises a plurality of the flow channel sections (175,176), a plurality of the valves (175A,176A) corresponding to the respective flow channel sections (175,176), and a plurality of the reserving sections (164) corresponding to the respective flow channel sections (175,176); and
the determination section (150) includes at least one criterion for determining the deterioration degrees of the respective valves (175A,176A).

10. The image forming apparatus (1) according to any one of claims 1 to 9, further comprising an ink ejecting section (165) that is configured to eject the ink, wherein the flow channel section (175) and the reserving section (164) communicate with the ink ejecting section (165).

11. The image forming apparatus (1) according to claim 10, wherein the reserving section corresponds to a second sub-tank (164) provided such that ink sucked from a first sub-tank (162) by a sucking section (172A) is supplied to the second sub-tank (164), and such the ink is supplied from the second sub-tank (164) to the ink ejecting section (165), and the flow channel section (175) is provided to communicate between the ink ejecting section (165) and the first sub-tank (162) .

12. The image forming apparatus (1) according to claim 10 or 11, comprising a heating section (168) for heating the ink.

13. A method for determining a deterioration degree of a valve (175A) in a valve device of an image forming apparatus (1) including a flow channel section (175) where ink flows, a reserving section (164) that reserves the ink from the flow channel section (175), a valve (175A) that switches between opening and blocking of the ink flow in the flow channel section (175), the method comprising:
controlling an operation of the valve (175A) by applying a predetermined electrical operation signal to the valve (175A); and
determining a deterioration degree of the valve (175A) by acquiring a pressure in the reserving section (164) corresponding to a signal value of the electrical operation signal applied to the valve (175A) and determining whether the pressure is within a predetermined normal range.

14. The method for determining a deterioration degree of a valve (175A) in a valve device of an image forming apparatus (1) according to claim 13, wherein, for determining whether the predetermined pressure is within a normal pressure range in which the valve (175A) operates normally, it is compared whether a pressure rising amount is greater when the valve (175A) is failing than when it is operating normally.

15. The method for determining a deterioration degree of a valve (175A) in a valve device of an forming apparatus (1) according to claim 13 or 14, wherein deterioration degree of the valve (175A) is determined either before or after an ink ejecting section (165) is maintained, the ink ejecting section (165) configured to eject the ink and the flow channel section (175) and the reserving section (164) communicating with the ink ejecting section (165).

16. The method for determining a deterioration degree of a valve (175A) in a valve device of an forming apparatus (1) according to claim 13, 14 or 15, wherein the ink is a gel ink.

## Patentansprüche

1. Ein Bilderzeugungsgerät (1) mit einer Ventilvorrichtung, wobei die Ventilvorrichtung umfasst:
einen Strömungskanalabschnitt (175), wo im Betrieb Tinte fließt,
einen Reservierungsabschnitt (164), der im Betrieb die Tinte aus dem Strömungskanalabschnitt (175) reserviert,
ein Ventil (175A), das konfiguriert ist, um durch Anlegen eines vorbestimmten elektrischen Betriebssignals zwischen einem Öffnen und einem Blockieren des Tintenflusses in dem Strömungskanalabschnitt (175) umzuschalten,
einen Erfassungsabschnitt (167) zum Erfassen eines Drucks in dem Reservierungsabschnitt (164), und
einen Bestimmungsabschnitt (150), der konfiguriert ist, um zu bestimmen, ob das Ventil (175A) normal arbeitet oder nicht, indem der Druck in dem Reservierungsabschnitt (164) von dem Erfassungsabschnitt (167) entsprechend einem Signalwert des an das Ventil (175A) angelegten elektrischen Betriebssignals erfasst und bestimmt wird, ob der Druck innerhalb eines vorbestimmten normalen Bereichs liegt, und um den Verschlechterungsgrad des Ventils (175A) auf der Grundlage des Bestimmungsergebnisses zu bestimmen.

2. Das Bilderzeugungsgerät (1) nach Anspruch 1, wobei der Bestimmungsabschnitt (150) konfiguriert ist, um den Signalwert des vorbestimmten elektrischen Betriebssignals, das an das Ventil (175A) angelegt wird, in einer Vielzahl von Stufen zu variieren, um zu bestimmen, ob das Ventil (175A) normal arbeitet oder nicht, basierend auf den erfassten Drücken in dem Reservierungsabschnitt (164), die jeweils den Signalwerten entsprechen, und um den Verschlechterungsgrad des Ventils (175A) basierend auf dem Bestimmungsergebnis zu bestimmen.

3. Das Bilderzeugungsgerät (1) nach Anspruch 2, wobei der Bestimmungsabschnitt (150) konfiguriert ist, um den Signalwert des vorbestimmten elektrischen Betriebssignals, das an das Ventil (175A) angelegt wird, schrittweise auf einen Nennwert des elektrischen Betriebssignals zu erhöhen.

4. Das Bilderzeugungsgerät (1) nach Anspruch 3, wobei der Bestimmungsabschnitt (150) konfiguriert ist, um den Verschlechterungsgrad des Ventils (175A) basierend auf einem minimalen Signalwert des vorbestimmten elektrischen Betriebssignals, bei dem das Ventil (175A) normal arbeitet, zu bestimmen.

5. Das Bilderzeugungsgerät (1) nach Anspruch 4, wobei der Bestimmungsabschnitt (150) konfiguriert ist, um eine verbleibende Lebensdauer des Ventils (175A) auf der Grundlage einer vorbestimmten Beziehung zwischen einem Verwendungszustand des Ventils (175A) und dem minimalen Wert zu berechnen, wobei der Verwendungszustand ein Verhältnis einer tatsächlichen Anzahl von Ansteuerungszeiten des Ventils (175A) zu der als Spezifikation festgelegten Anzahl von Ansteuerungszeiten angibt.

6. Das Bilderzeugungsgerät (1) nach Anspruch 4 oder 5, wobei der Bestimmungsabschnitt (150) konfiguriert ist, um als den Verschlechterungsgrad ein Verhältnis einer zweiten Differenz zu einer ersten Differenz zu definieren, wobei die zweite Differenz eine Differenz zwischen dem Nennwert des vorbestimmten elektrischen Betriebssignals des Ventils (175A) und dem minimalen Wert des vorbestimmten elektrischen Betriebssignals des Ventils (175A) ist und die erste Differenz eine Differenz zwischen dem Nennwert des vorbestimmten elektrischen Betriebssignals und dem minimalen Wert des vorbestimmten elektrischen Betriebssignals des Ventils (175A) ist, wenn das Ventil (175A) neu ist.

7. Das Bilderzeugungsgerät (1) nach einem der Ansprüche 1 bis 6, wobei der Bestimmungsabschnitt (150) konfiguriert ist, um zu bestimmen, ob der vorbestimmte Druck innerhalb eines normalen Druckbereichs liegt, in dem das Ventil (175A) normal arbeitet, durch vergleichen, ob ein Druckanstiegsbetrag größer ist, wenn das Ventil (175A) ausfällt, als wenn es normal arbeitet.

8. Das Bilderzeugungsgerät (1) nach einem der Ansprüche 1 bis 7, wobei der Bestimmungsabschnitt (150) konfiguriert ist, um einen Anzeigebefehl für das Bestimmungsergebnis des Verschlechterungsgrades auszugeben.

9. Das Bilderzeugungsgerät (1) nach einem der Ansprüche 1 bis 8, wobei:
die Ventilvorrichtung (1) eine Vielzahl von Strömungskanalabschnitten (175,176), eine Vielzahl von Ventilen (175A,176A), die den jeweiligen Strömungskanalabschnitten (175,176) entsprechen, und eine Vielzahl von Reservierungsabschnitten (164), die den jeweiligen Strömungskanalabschnitten (175,176) entsprechen, umfasst, und
der Bestimmungsabschnitt (150) mindestens ein Kriterium zum Bestimmen der Verschlechterungsgrade der jeweiligen Ventile (175A,176A) enthält.

10. Das Bilderzeugungsgerät (1) nach einem der Ansprüche 1 bis 9, ferner mit einem Tintenausstoßabschnitt (165), der zum Ausstoßen der Tinte konfiguriert ist, wobei der Strömungskanalabschnitt (175) und der Reservierungsabschnitt (164) mit dem Tintenausstoßabschnitt (165) in Verbindung sind.

11. Das Bilderzeugungsgerät (1) nach Anspruch 10, wobei der Reservierungsabschnitt einem zweiten Nebentank (164) entspricht, der so vorgesehen ist, dass Tinte, die von einem ersten Nebentank (162) durch einen Ansaugabschnitt (172A) angesaugt wird, dem zweiten Nebentank (164) zugeführt wird, und so die Tinte von dem zweiten Nebentank (164) dem Tintenausstoßabschnitt (165) zugeführt wird, und der Strömungskanalabschnitt (175) vorgesehen ist, um eine Verbindung zwischen dem Tintenausstoßabschnitt (165) und dem ersten Nebentank (162) herzustellen.

12. Das Bilderzeugungsgerät (1) nach Anspruch 10 oder 11, mit einem Heizabschnitt (168) zum Erwärmen der Tinte.

13. Ein Verfahren zum Bestimmen eines Verschlechterungsgrads eines Ventils (175A) in einer Ventilvorrichtung eines Bilderzeugungsgeräts (1), das einen Strömungskanalabschnitt (175), in dem Tinte fließt, einen Reservierungsabschnitt (164), der die Tinte aus dem Strömungskanalabschnitt (175) reserviert, und ein Ventil (175A), das zwischen einem Öffnen und einem Blockieren des Tintenflusses in dem Strömungskanalabschnitt (175) umschaltet, enthält, wobei das Verfahren umfasst:
Steuern eines Betriebs des Ventils (175A) durch Anlegen eines vorbestimmten elektrischen Betriebssignals an das Ventil (175A), und
Bestimmen eines Verschlechterungsgrads des Ventils (175A) durch Erfassen eines Drucks in dem Reservierungsabschnitt (164) entsprechend einem Signalwert des an das Ventil (175A) angelegten elektrischen Betriebssignals und Bestimmen, ob der Druck innerhalb eines vorbestimmten Normalbereichs liegt.

14. Das Verfahren zum Bestimmen eines Verschlechterungsgrades eines Ventils (175A) in einer Ventilvorrichtung eines Bilderzeugungsgeräts (1) nach Anspruch 13, wobei zum Bestimmen, ob der vorbestimmte Druck innerhalb eines normalen Druckbereichs liegt, in dem das Ventil (175A) normal arbeitet, verglichen wird, ob ein Druckanstiegsbetrag größer ist, wenn das Ventil (175A) ausfällt, als wenn es normal arbeitet.

15. Das Verfahren zum Bestimmen eines Verschlechterungsgrades eines Ventils (175A) in einer Ventilvorrichtung eines Erzeugungsgeräts (1) nach Anspruch 13 oder 14, wobei der Verschlechterungsgrad des Ventils (175A) entweder vor oder nach der Wartung eines Tintenausstoßabschnitts (165) bestimmt wird, wobei der Tintenausstoßabschnitt (165) konfiguriert ist, um die Tinte auszustoßen, und der Strömungskanalabschnitt (175) und der Reservierungsabschnitt (164) mit dem Tintenausstoßabschnitt (165) in Verbindung stehen.

16. Das Verfahren zum Bestimmen eines Verschlechterungsgrades eines Ventils (175A) in einer Ventilvorrichtung einer Erzeugungsgeräts (1) nach Anspruch 13, 14 oder 15, wobei die Tinte eine Geltinte ist.

## Revendications

1. Installation (1) de formation d'image comprenant un dispositif à soupape, le dispositif à soupape comprenant :
une partie (175) à conduit d'écoulement, dans laquelle de l'encre s'écoule en fonctionnement ;
une partie (164) de réservoir, qui met en réserve l'encre provenant de la partie (175) à conduit d'écoulement en fonctionnement ;
une soupape (175A), qui est configurée pour commuter entre une ouverture et un blocage de l'écoulement d'encre dans la partie (175) à conduit d'écoulement par application d'un signal électrique de fonctionnement déterminé à l'avance ;
une partie (167) de détection pour détecter une pression dans la partie (164) de réservoir ; et
une partie (150) de détermination, qui est configurée pour déterminer si la vanne (175A) fonctionne normalement ou ne fonctionne pas normalement en acquérant la pression dans la partie (164) de réservoir, à partir de la partie (167) de détection, correspondant à une valeur du signal électrique de fonctionnement appliqué à la soupape (175A), et en déterminant si la pression est dans une plage normale déterminée à l'avance, et pour déterminer le degré de détérioration de la soupape (175A) sur la base du résultat de la détermination.

2. Installation (1) de formation d'image suivant la revendication 1, dans laquelle la partie (150) de détermination est configurée pour faire varier la valeur de signal électrique de fonctionnement déterminé à l'avance appliqué à la soupape (175A) en une pluralité de paliers, pour déterminer si la soupape (175A) fonctionne normalement ou ne fonctionne pas normalement, sur la base des pressions acquises dans la partie (164) de réservoir, correspondant respectivement aux valeurs du signal, et pour déterminer le degré de détérioration de soupape (175A) sur la base du résultat de la détermination.

3. Installation (1) de formation d'image suivant la revendication 2, dans laquelle la partie (150) de détermination est configurée pour augmenter la valeur du signal électrique de fonctionnement déterminée à l'avance appliqué à la soupape (175A) jusqu'à une valeur nominale du signal électrique de fonctionnement.

4. Installation (1) de formation d'image suivant la revendication 3, dans laquelle la partie (150) de détermination est configurée pour déterminer le degré de détérioration de la soupape (175A) sur la base d'une valeur minimum du signal électrique de fonctionnement déterminée à l'avance, à laquelle la soupape (175A) fonctionne normalement.

5. Installation (1) de formation d'image suivant la revendication 4, dans laquelle la partie (150) de détermination est configurée pour calculer une durée de vie restante de la soupape (175A) sur la base d'une relation déterminée à l'avance entre une condition d'utilisation de la soupape (175A) et la valeur minimum, la condition d'utilisation indiquant un rapport entre un nombre en cours de fois de commande de la soupape (175A) et le nombre de fois de commande fixé en tant que caractéristique technique.

6. Installation (1) de formation d'image suivant la revendication 4 ou 5, dans laquelle la partie (150) de détermination est configurée pour définir, comme degré de détérioration, un rapport d'une deuxième différence à une première différence, la deuxième différence étant une différence entre la valeur nominale du signal électrique de fonctionnement déterminé de la soupape (175A) et la valeur minimum du signal électrique de fonctionnement déterminé à l'avance de la soupape (175A), la première différence étant une différence entre la valeur nominale du signal électrique de fonctionnement déterminé à l'avance et la valeur minimum du signal électrique de fonctionnement déterminé de la soupape (175A) lorsque la soupape (175A) est neuve.

7. Installation (1) de formation d'image suivant l'une quelconque des revendications 1 à 6, dans laquelle la partie (150) de détermination est configurée pour déterminer si la pression déterminée à l'avance est dans une plage de pression normale, dans laquelle la soupape (175A) fonctionne normalement, en comparant si un montant, dont la pression s'est élevée, est plus grand lorsque la soupape (175A) est défaillante que lorsqu'elle fonctionne normalement.

8. Installation (1) de formation d'image suivant l'une quelconque des revendications 1 à 7, dans laquelle la partie (150) de détermination est configurée pour sortir une instruction d'affichage du résultat de la détermination du degré de détérioration.

9. Installation (1) de formation d'image suivant l'une quelconque des revendications 1 à 8, dans laquelle :
le dispositif (1) à soupape comprend une pluralité de parties (175, 176) à conduit d'écoulement, une pluralité des soupapes (175A, 176A), correspondant aux parties (175, 176) respectives à conduit d'écoulement, et une pluralité des parties (164) de réservoir correspondant aux parties (175, 176) respectives à conduit d'écoulement ; et
la partie (150) de détermination comprend au moins un critère de détermination des degrés de détérioration des soupapes (175A, 176A) respectives.

10. Installation (1) de formation d'image suivant l'une quelconque des revendications 1 à 9, comprenant en outre une partie (165) d'éjection d'encre, qui est configurée pour éjecter l'encre, la partie (175) à conduit d'écoulement et la partie (164) de réservoir communiquant avec la partie (165) d'éjection d'encre.

11. Installation (1) de formation d'image suivant la revendication 10, dans laquelle la partie de réservoir correspond à un deuxième sous-réservoir (164) prévu de manière à ce que de l'encre aspirée d'un premier sous-réservoir (162) par une partie (172A) d'aspiration soit envoyée au deuxième sous-réservoir (164), et de manière à ce que l'encre soit envoyée du deuxième sous-réservoir (164) à la partie (165) d'éjection d'encre, et la partie (175) à conduit d'écoulement est prévue pour communiquer entre la partie (165) d'éjection d'encre et le premier sous-réservoir (162) .

12. Installation (1) de formation d'image suivant la revendication 10 ou 11, comprenant une partie (168) de chauffage pour chauffer l'encre.

13. Procédé de détermination d'un degré de détérioration d'une soupape (175A) d'un dispositif à soupape d'une installation (1) de formation d'image, comprenant une partie (175) à conduit d'écoulement où de l'encre s'écoule, une partie (164) de réservoir, qui met en réserve l'encre provenant de la partie (175) à conduit d'écoulement, une soupape (175A), qui commute entre une ouverture et un blocage de l'écoulement de l'encre dans la partie (175) à conduit d'écoulement, procédé dans lequel :
on commande un fonctionnement de la soupape (175A) en appliquant un signal électrique de fonctionnement déterminé à l'avance à la soupape (175A) ; et
on détermine un degré de détérioration de la soupape (175A), en acquérant une pression dans la partie (164) de réservoir correspondant à une valeur du signal électrique de fonctionnement appliqué à la soupape (175A) et on détermine si la pression est dans une plage normale déterminée à l'avance.

14. Procédé de détermination d'un degré de détérioration d'une soupape (175A) d'un dispositif à soupape d'une installation (1) de formation d'image suivant la revendication 13, dans lequel, pour déterminer si la pression déterminée à l'avance est dans une plage normale de pression, dans laquelle la soupape (175A) fonctionne normalement, on compare si un montant d'élévation de la pression est plus grand lorsque la soupape (175A) est défaillante que lorsqu'elle fonctionne normalement.

15. Procédé de détermination d'un degré de détérioration d'une soupape (175A) d'un dispositif à soupape d'une installation (1) de formation d'image suivant la revendication 13 ou 14, dans lequel on détermine un degré de détérioration de la soupape (175A) soit avant, soit après qu'une partie (165) d'éjection d'encre est maintenue, la partie (165) d'éjection d'encre étant configurée pour éjecter l'encre, et la partie (175) à conduit d'écoulement et la partie (164) de réservoir communiquant avec la partie (165) d'éjection d'encre.

16. Procédé de détermination d'un degré de détérioration d'une soupape (175A) d'un dispositif à soupape d'une installation (1) de formation d'image suivant la revendication 13, 14 ou 15, dans lequel l'encre est une encre en gel.
